# EUROPEAN PATENT SPECIFICATION

(11) **EP 2 285 044 B1**
(45) Date of publication and mention of the grant of the patent: **17.05.2017**
(21) Application number: 08874524.5
(22) Date of filing: 30.12.2008
(51) Int. Cl.: H04L 12/02, H04L 12/24, G06F 9/445

(54) **COMPUTER READABLE MEDIUM, NORTHBOUND INTERFACE UNIFORM PLATFORM AND STARTING METHOD THEREOF**
COMPUTERLESBARES MEDIUM, NORTHBOUND-SCHNITTSTELLEN-UNIFORM-PLATTFORM UND STARTVERFAHREN DAFÜR
SUPPORT LISIBLE PAR ORDINATEUR, PLATE-FORME UNIFORME D INTERFACE VERS LES SERVICES ET PROCÉDÉ DE DÉMARRAGE CORRESPONDANT

(30) Priority: 06.06.2008 CN 200810067641
(43) Date of publication of application: 16.02.2011
(73) Proprietor: ZTE Corporation, Shenzhen, Guangdong 518057 (CN)
(72) Inventor: XU, Zhenliang, Guangdong 518057 (CN)
(74) Representative: Studio Torta S.p.A.
(86) International application number: PCT/CN2008/073872
(87) International publication number: WO 2009/146598

(56) References cited:
- CN-A- 101 047 545
- CN-A- 101 110 708
- CN-A- 101 192 995
- CN-A- 101 304 331
- SASAKI Y ET AL: "Integrated network management system for the private international networks", PRIVATE SWITCHING SYSTEMS AND NETWORKS, 1992., SECOND INTERNATIONAL CO NFERENCE ON LONDON, UK, LONDON, UK,IEE, UK, 1 January 1992 (1992-01-01), pages 149-156, XP006515327, ISBN: 978-0-85296-546-7
- "FastBenchÂ TM for Open Mediation Solutions", 3GPP DRAFT; FASTBENCH_MD_WHITEPAPER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Helsinki, Finland; 20010731, 31 July 2001 (2001-07-31), XP050290454, [retrieved on 2001-07-31]
- TOM GRIM RAPPORTEUR ET AL: "M.3017, Framework for the Integrated Management of Hybrid Circuit/Packet Networks, for consent;TD 13 (WP 2/4)", ITU-T DRAFTS ; STUDY PERIOD 2001-2004, INTERNATIONAL TELECOMMUNICATION UNION, GENEVA ; CH, vol. Study Group 04 ; 10/4, 13 February 2003 (2003-02-13), pages 1-29, XP017511814, [retrieved on 2003-02-13]
- GROMPIN E ET AL: "An integrated network management approach for managing hybrid IP and WDM networks", IEEE NETWORK, IEEE SERVICE CENTER, NEW YORK, NY, US, vol. 17, no. 3, 1 May 2003 (2003-05-01), pages 37-43, XP011096829, ISSN: 0890-8044, DOI: 10.1109/MNET.2003.1201475
- WON-KYU HONG ET AL: "An integrated network management system for provisioning the efficient ATM over ADSL service", MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001; [IEEE MILITARY COMMUNICATIONS CONFERENCE], NEW YORK, NY : IEEE, US, vol. 1, 28 October 2001 (2001-10-28), pages 44-53, XP010578979, DOI: 10.1109/MILCOM.2001.985762 ISBN: 978-0-7803-7225-2

## Description

### Field of the Invention

The present invention relates to northbound interface field, and in particular to a computer readable medium, a northbound interface (including CORBA and SNMP interfaces) uniform platform and a starting method thereof.

### Background of the Invention

To implement a distributed computation, a common object request broker architecture (CORBA) is introduced. The CORBA may provide a uniform standard for developing a distributed object system, this standard is independent of detailed platforms, languages and manufacturers.

The interface define language (IDL) is an important concept of the CORBA system and enables the CORBA to be independent of the languages. The internal structure of the CORBA is divided into the following three core parts, i.e., an object request broker (ORB), an IDL Stub (client implementation) and an IDL Skeleton (object implementation); wherein the ORB is a mechanism in which a client application program is capable of calling a remote object method; the IDL Stub and the IDL Skeleton are automatically compiled and generated by an IDL Complier according to the defined IDL.

A simple network management protocol (SNMP) is a standard protocol which is specifically-designed for an IP network management network node (for example, a server, a workstation, a router, a switch and so on); the SNMP is encapsulated into a user datagram protocol (UDP).

A management information base (MIB) is an important component of a network management system, which is composed of multiple managed objects and attributes thereof of a system. The definition of the MIB is independent of the detailed network management protocol, which indicates variables maintained by network elements and gives data structures of all possible managed object sets in the network at the same time.

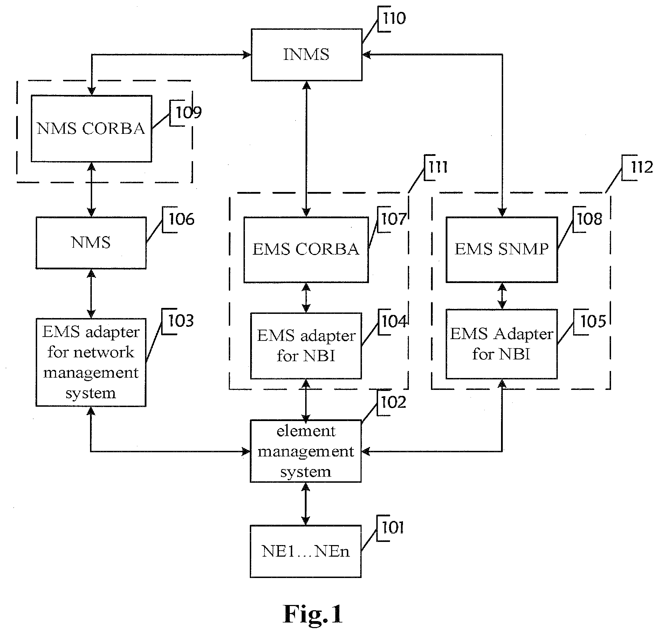

Fig.1 is a frame structure diagram of a current northbound interface. As shown in Fig.1, network elements (NE1...NEn) 101 are several network elements of a practical network; element management system (EMS) 102 is a network element management system for managing NE1...NEn 101; EMS adapter for network management system (EMS adapter for NMS) 103 is an adapter which is needed for the EMS 102 being accessed by an upper layer network management; EMS adapter for northbound interface (EMS Adapter for NBI) 104 is an adapter which is needed for a netwok element management system common object request broker architecture (EMS CORBA) 107 accessing the EMS 102; EMS Adapter for NBI 105 is an adapter which is needed for a network element management system simple network management protocol (EMS SNMP) 108 accessing the EMS 102; wherein the EMS Adapter for NBI 104 and EMS Adapter for NBI* 105 are the same adapter; an NMS 106 is a network management system; the EMS CORBA 107 is a CORBA adapter; the EMS SNMP 108 is an SNMP adapter; a network management system common object request broker architecture (NMS CORBA) 109 is a CORBA adapter which is needed for the NMS 106 being accessed by the upper layer network management; an integrated network management system (INMS) 110 is an upper layer integrated network management system; EMS Adapter for NBI 104 and EMS CORBA 107 form a CORBA system 111 which is the CORBA system which is needed for the INMS 110 managing the EMS 102; the EMS Adapter for NBI 105 and the EMS SNMP 108 form a SNMP system which is needed for the INMS 110 managing the EMS 102.

The above northbound interface mainly includes three products of the EMS CORBA, the NMS CORBA and the EMS SNMP, such as 111, 109 and 112 of Fig. 1, the product layout thereof has the following shortcomings:
First, there is no uniform northbound interface platform, and the product function is relatively simple; a kind of product can not provide multiple interface functions, and there is no market competitiveness; secondly, the installing process is repeated, and five programs are need to be installed respectively for installing all the above interfaces, i.e., the EMS Adapter for NBI 104, the EMS CORBA 107, the EMS Adapter for NBI 105, the EMS SNMP 108, and the NMS CORBA 109 are installed respectively; thirdly, sometimes, since it is necessary to install multiple northbound interface products together and each product has several corresponding configuration files, the engineering configuration is complex and error-prone; fourthly, there are many northbound interface products, and each interface is served as a product independently; the cost of research, development and maintenance is very high.

Document by Sasaki Y. Et al., "Integrated network management system for the private international networks", Private Switching Systems and Networks, 1992, XP006515327, discloses the development of integrated network management system for private international networks that can meet end-to-end network management needs under the globalized and complicated network environment.

Document FastBench ® for open Mediation Solution, technical white paper by NETMANSYS Inc., discloses a technical overview of the FastBench Mediation Development Environment to help telecom and datacom equipment manufacturers, system integrators, independent software vendors and service providers to meet the demand for high-performance mediation solutions.

### Summary of the Invention

The present invention is provided for the above shortcomings in the prior art; for this reason, the object of the present invention is to provide a northbound interface uniform platform, a starting method thereof and a computer readable medium, according to claims 1, 2 and 4 respectively.

In order to achieve the above objects, according to one aspect of the present invention, a northbound interface uniform platform is provided.

The northbound interface uniform platform according to the present invention comprises:
an NMS CORBA module, which is used to provide an NMS CORBA adapter;
an EMS CORBA module, which is used to provide an EMS CORBA adapter;
an EMS SNMP module, which is used to provide an EMS SNMP adapter;
an EMS Adapter for NBI module, connected respectively with the EMS CORBA module and the EMS SNMP module, configured to access an external EMS and introduce the access of the EMS CORBA module and the EMS SNMP module;
a uniform guarding process module, configured to start, guard and close the EMS Adapter for NBI module, the EMS SNMP module, the EMS CORBA module and the NMS CORBA module.

In order to achieve the above objects, according to another aspect of the present invention, a method for starting a northbound interface uniform platform is provided.

The method for starting a northbound interface uniform platform according to the present invention comprises:
A: select and install at least one module of an NMS CORBA module, an EMS CORBA module, an EMS SNMP module in the northbound interface uniform platform according to the license information obtained by a user, modify the northbound interface uniform configuration file after the installation is successful, so as to enable the northbound interface uniform platform to start normally;
B: start the northbound interface uniform platform; a system reads the modified northbound interface uniform configuration file, and notifies a uniform guarding process module the configuration file; the uniform guarding process module judging whether to start the EMS CORBA module and the EMS SNMP module according to the configuration file; if it is not-to-start, the uniform guarding process module starting the NMS CORBA module; otherwise, proceed to step C;
C: the uniform guarding process module judges whether to start the NMS CORBA module and the EMS CORBA module according to the modified northbound interface uniform configuration file; if it is not-to-start, the uniform guarding process module starts the EMS SNMP module; otherwise, the uniform guarding process module starts the EMS CORBA module;
D: start the EMS Adapter for NBI module, and the start of the northbound interface uniform platform is finished.
   The above license information, including information such as a started module type, an IP and port, has been determined when leaving the factory according to the requirements of users.
E: the uniform platform provided by the present invention may further comprise other interface types according to the frame of the present invention.

In order to achieve the above objects, according to yet another aspect of the present invention, a computer readable medium is provided.

The computer readable medium according to the present invention carries one or more instructions, and a processor performs the steps included by the above method for starting the northbound interface uniform platform when the one or more instructions are performed by the processor.

By at least one of the above technical schemes, the present invention may increase the interface expansibility, optimize the installation process, simplify the configuration and reduce the cost of the product development and maintenance.

### Brief Description of the Drawings

The drawings illustrated here provide a further understanding of the present invention and form a part of the present application. The exemplary embodiments and the description thereof are used to explain the present invention without unduly limiting the scope of the present invention, wherein:
Fig. 1 is a frame structure diagram of a current northbound interface;
Fig.2 is a frame structure diagram illustrating the northbound interface of a northbound interface uniform platform according to an embodiment of the present invention;
Fig.3 is a flowchart of a method for starting a northbound interface uniform platform according to an embodiment of the present invention.

### Detailed Description of Embodiments

### Function overview

In the technical scheme provided by an embodiment of the present invention, a northbound interface uniform platform comprises a CORBA and SNMP northbound interface function supported by an EMS and an NMS, at the same time an uniform guarding process, for starting, guarding and closing programs, is provided, and only one EMS Adapter for NBI is needed; therefore, in comparison with the prior art, the technical scheme provided by the embodiment of the present invention may increase the interface expansibility, optimize the install process, simplify the configuration and reduce the cost of the product development and maintenance.

To understand the present invention better, the present invention is hereinafter described further by combining the accompanying drawings and embodiments. It should be noted that the embodiments of the present invention and the features in the embodiments may be combined with each other if there is no conflict.

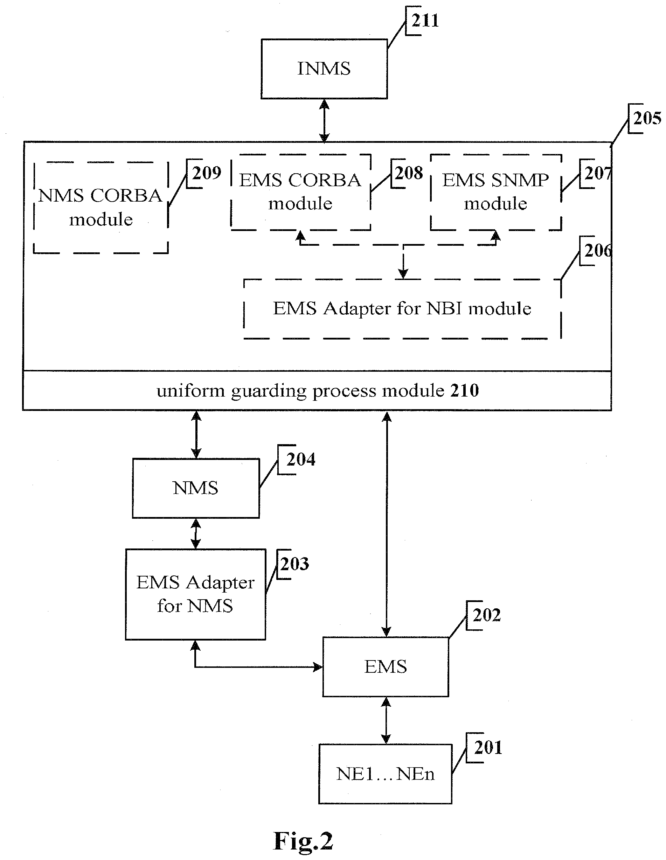

Fig.2 is a frame structure diagram illustrating the northbound interface of a northbound interface uniform platform based on the present invention. As shown in Fig. 2, the northbound interface uniform platform 205 comprises an NMS CORBA module 209 for providing an NMS CORBA adapter, an EMS CORBA module 208 for providing an EMS CORBA adapter, an EMS SNMP module 207 for providing an EMS SNMP adapter, an EMS Adapter for NBI module 206, connected respectively with the EMS CORBA module 208, the EMS SNMP module 207, configured to access an external EMS 202 and introduce the access of the EMS CORBA module 208 and the EMS SNMP module 207, a uniform guarding process module 210, configured to start, guard and close the EMS Adapter for NBI module 206, EMS SNMP module 207, EMS CORBA module 208 and NMS CORBA module 209. the NE1...NEn 201 in Fig.2 are several network elements of the practical network; the EMS 202 is a network element management system for managing 201; the EMS Adapter for NMS 203 is the adapter which is needed for an upper layer network management accessing the EMS 202; the NMS 204 is a network management system connected with the northbound interface uniform platform; an INMS 211 is an upper layer integrated network management system connected with the northbound interface uniform platform.

The northbound interface uniform platform of the embodiment of the present invention comprises the CORBA and SNMP northbound interface function supported by the EMS and the NMS, at the same time an uniform guarding process, for starting, guarding and closing programs, is provided, and only one EMS Adapter for NBI is needed; therefore, in comparison with the prior art, the technical scheme provided by the embodiment of the present invention may simplify the configuration and reduce the cost.

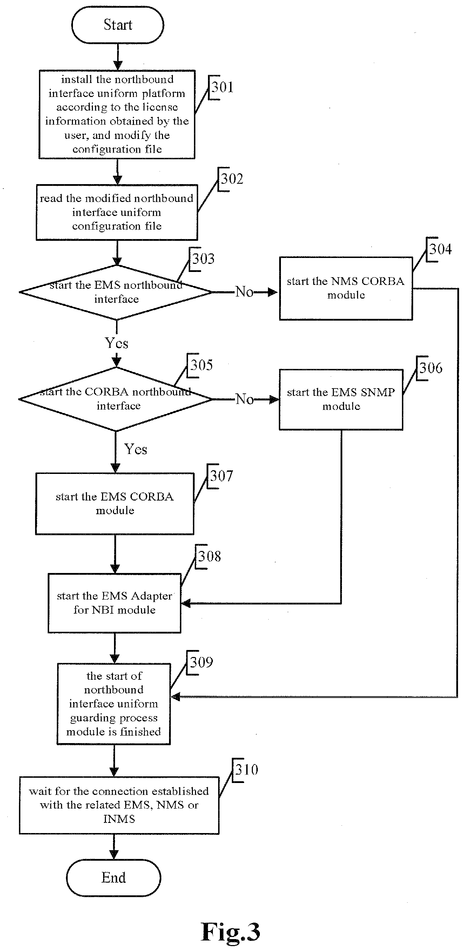

Fig.3 is a flowchart of a method for starting a northbound interface uniform platform according to an embodiment of the present invention. As shown in Fig.3, the starting method includes the following steps (Steps 301-310):
Step 301, select and install at least one module of an NMS CORBA module, an EMS CORBA module, an EMS SNMP module in the northbound interface uniform platform according to the license information obtained by a user, modify the northbound interface uniform configuration file according to the license information after the installation is successful, so as to enable the northbound interface uniform platform to start normally; wherein the license information, including but not limited to the information such as a started module type, an IP and port, is the information which has been determined when leaving the factory according to the requirements of users; the above configuration file includes but is not limited to the information such as the port, the IP in the license information;
Step 302, start the northbound interface uniform platform; a system reads the modified northbound interface uniform configuration file, and notifies a uniform guarding process module the configuration file;
Step 303, the uniform guarding process module judging whether to start the EMS CORBA module and the EMS SNMP module (i.e., EMS northbound interface) according to the configuration file; if the result of the judgment is not-to-start, proceed to Step 304; otherwise, proceed to Step 305;
Step 304, the uniform guarding process module starts the NMS CORBA module, and thus the start of the NMS CORBA system is finished;
Step 305, the uniform guarding process module judges whether to start the NMS CORBA module and the EMS CORBA module (i.e., CORBA northbound interface) according to the modified northbound interface uniform configuration file; if the result of the judgment is not-to-start, proceed to Step 306; otherwise, proceed to Step 307;
Step 306, the uniform guarding process module starts the EMS SNMP module;
Step 307, the uniform guarding process module starts the EMS CORBA module;
Step 308, start the EMS Adapter for NBI module, and thus the start of the EMS SNMP system or the EMS CORBA system is finished;
Step 309, thus, the start of the northbound interface uniform guarding process module is finished;
Step 310, thus, the start of the northbound interface uniform platform is finished, and waiting for the connection established with the related EMS, NMS and INMS.

In an embodiment of the present invention, a computer readable medium is provided. The computer readable medium carries one or more instructions, and a processor performs the steps included by the above method for starting the northbound interface uniform platform when the one or more instructions are performed by the processor.

To sum up, the northbound interface uniform platform and the starting method thereof according to the embodiments of the present invention has the following beneficial effects:
(1) the northbound uniform platform of the embodiment of the present invention has plenty of functions, and provides the CORBA and SNMP northbound interface function supported by the EMS and the NMS; not only the installation process is simple, since the installation of all the northbound interfaces may be completed for one time, but also the user may select to start a corresponding northbound interface according to the obtained license information;
(2) the parameters for starting the northbound interface uniform platform of the embodiment of the present invention only depend on a uniforme configuration file; therefore, the error probability and the complexity of the engineering configuration may be effectively reduced;
(3) the uniform development of the northbound interface platform may reduce the cost of the repeated work, increase the information sharing degree, and reduce the cost of development and maintenance;
(4) for the implementation and design of the northbound interface product, the embodiments of the present invention can provide a system solution, enrich the northbound interface functions, reduce the cost, simplify the configuration and improve the market competitiveness.

Apparently, the person skilled in the art should understand that each module and each step of the present invention above may be realized by the general calculating apparatus; they may be collected in a single calculating apparatus or distributed on the network formed by a plurality of the calculating apparatus. Selectively, they may be realized by the program codes executable by the calculating apparatus, therefore, they can be stored in the storing apparatus to be executed by the calculating apparatus, or they can be fabricated into integrated circuit modules respectively, or a plurality of the steps thereof are fabricated into individual integrated circuit module for the accomplishment. Thus, the present invention is not limited to the combination of any particular hardware and software.

## Claims

1. A northbound interface uniform platform (205), comprising: a network management system common object request broker architecture NMS CORBA module (209), which is used to provide an NMS CORBA adapter; an network element management system common object request broker architecture EMS CORBA module (208), which is used to provide an EMS CORBA adapter; an network element management system simple network management protocol EMS SNMP module (207), which is used to provide an EMS SNMP adapter, **characterized in that** the northbound interface uniform platform further comprises:
an EMS Adapter for Northbound Interface, NBI, module (206), connected respectively with the EMS CORBA module and the EMS SNMP module, configured to access an external EMS and introduce the access of the EMS CORBA module and the EMS SNMP module;
a uniform guarding process module (210), configured to start, guard and close the EMS Adapter for NBI module, the EMS SNMP module, the EMS CORBA module or the NMS CORBA module.

2. A method for starting a northbound interface uniform platform, **characterized by**, comprising the following steps:
A: selecting and installing (301) at least one of preset modules of a northbound interface uniform platform (205) according to license information obtained by a user, modifying the northbound interface uniform configuration file after the installation is successful, so as to enable the northbound interface uniform platform to start normally; wherein the preset module comprises: an NMS CORBA module (209), an EMS CORBA module (208) and an EMS SNMP module (207);
B: starting the northbound interface uniform platform; reading (302) the modified northbound interface uniform configuration file, and notifying a uniform guarding process module about the northbound interface uniform configuration file; the uniform guarding process module judging whether to start (307) the EMS CORBA module or the EMS SNMP module (306) according to the configuration file; if it is judged not to start, the uniform guarding process module starting the NMS CORBA module (304), and the starting process being finished; otherwise, proceeding to step C;
C: the uniform guarding process module judging whether to start the NMS CORBA module (304) or the EMS CORBA module (306) according to the modified northbound interface uniform configuration file; if result of the judgment is not-to-start, the uniform guarding process module starting the EMS SNMP module (306), and proceeding to step D; otherwise, the uniform guarding process module starting the EMS CORBA module, and then proceeding to step D;
D: starting an EMS Adapter for NBI module (308).

3. The method for starting a northbound interface uniform platform according to claim 2, **characterized in that** the license information comprises: a type of started module, an IP and port information of the started module.

4. A computer readable medium, which carries one or more instructions, wherein a processor performs steps included by the method according to claim 2 when the one or more instructions are performed by the processor.

## Patentansprüche

1. Einheitliche Plattform (205) mit Northbound-Schnittstelle, umfassend: ein Netzwerkmanagementsystem-Common-Object-Request-Broker-Architecture NMS CORBA-Modul (209), das verwendet wird, um einen NMS CORBA-Adapter bereitzustellen; ein Netzwerkelementmanagementsystem-Common-Object-Request-Broker-Architecture EMS CORBA-Modul (208), das verwendet wird, um einen EMS CORBA-Adapter bereitzustellen; ein Netzwerkelementmanagementsystem-Simple-Network-Management-Protocol EMS SNMP-Modul (207), das verwendet wird, um einen EMS SNMP-Adapter bereitzustellen, **dadurch gekennzeichnet, dass** die einheitliche Plattform (205) mit Northbound-Schnittstelle ferner umfasst:
einen EMS-Adapter für Northbound-Interface,NBI,-Modul (206), jeweils verbunden mit dem EMS CORBA-Modul und dem EMS SNMP-Modul, der konfiguriert ist, auf ein externes EMS zuzugreifen und den Zugriff des EMS CORBA-Moduls und des EMS SNMP-Moduls einzuführen bzw. einzuleiten;
ein Einheitlicher-Bewachungsprozess-Modul (210), das konfiguriert ist, den EMS-Adapter für das NBI-Modul, das EMS SNMP-Modul, das EMS CORBA-Modul oder das NMS CORBA-Modul zu starten, zu bewachen und zu schließen.

2. Verfahren zum Starten einer einheitlichen Plattform mit Northbound-Schnittstelle, **dadurch gekennzeichnet, dass** es die folgenden Schritte umfasst:
A: Auswählen und Installieren (301) zumindest eines von voreingestellten bzw. vorgegebenen Modulen einer einheitlichen Plattform (205) mit Northbound-Schnittstelle gemäß Lizenzinformationen, die von einem Benutzer erhalten werden, Modifizieren der Northbound-Schnittstelle-Einheitliche-Konfigurationsdatei nachdem die Installation erfolgreich ist, um der einheitlichen Plattform mit Northbound-Schnittstelle zu ermöglichen, normal zu starten; wobei das voreingestellte bzw. vorgegebene Modul umfasst: ein NMS CORBA-Modul (209), ein EMS CORBA-Modul (208) und ein EMS SNMP-Modul (207);
B: Starten der einheitlichen Plattform mit Northbound-Schnittstelle; Lesen (302) der modifizierten Northbound-Schnittstelle-Einheitliche-Konfigurationsdatei und Benachrichtigen eines Einheitlicher-Bewachungsprozess-Moduls über die Northbound-Schnittstelle-Einheitliche-Konfigurationsdatei; wobei das Einheitlicher-Bewachungsprozess-Modul gemäß der Konfigurationsdatei beurteilt, ob das EMS CORBA-Modul oder das EMS SNMP-Modul (306) zu starten (307) ist; wenn beurteilt wird, nicht zu starten, dann startet das Einheitlicher-Bewachungsprozess-Modul das NMS CORBA-Modul (304) und der Startprozess wird beendet; ansonsten weiter mit Schritt C;
C: das Einheitlicher-Bewachungsprozess-Modul beurteilt gemäß der modifizierten Northbound-Schnittstelle-Einheitliche-Konfigurationsdatei, ob das NMS CORBA-Modul (304) oder das EMS CORBA-Modul (306) zu starten ist; wenn das Ergebnis der Beurteilung lautet, nicht zu starten, dann startet das Einheitlicher-Bewachungsprozess-Modul das EMS SNMP-Modul (306) und geht zu Schritt D über; ansonsten startet das das Einheitlicher-Bewachungsprozess-Modul das EMS CORBA-Modul und geht dann zu Schritt D über;
D: Starten eines EMS-Adapters für NBI-Modul (308).

3. Verfahren zum Starten einer einheitlichen Plattform mit Northbound-Schnittstelle nach Anspruch 2, **dadurch gekennzeichnet, dass** die Lizenzinformationen umfassen: einen Typ des gestarteten Moduls, eine IP und Port-Informationen des gestarteten Moduls.

4. Computerlesbares Medium, das einen oder mehrere Befehle trägt, wobei ein Prozessor Schritte ausführt, die von dem Verfahren nach Anspruch 2 umfasst sind, wenn der eine oder die mehreren Befehle von dem Prozessor ausgeführt werden.

## Revendications

1. Plateforme uniforme d'interface vers les services (205), comprenant : un module CORBA NMS (module d'architecture pour un intermédiaire commun dans les requêtes d'objet (CORBA) d'un système de gestion de réseau (NMS)) (209), qui est utilisé pour fournir un adaptateur CORBA NMS ; un module CORBA EMS (module d'architecture pour un intermédiaire commun dans les requêtes d'objet (CORBA) d'un système de gestion d'élément de réseau (EMS)) (208), qui est utilisé pour fournir un adaptateur CORBA EMS ; un module SNMP EMS (module de protocole simple de gestion de réseau (SNMP) d'un système de gestion d'élément de réseau (EMS)) (207), qui est utilisé pour fournir un adaptateur SNMP EMS, **caractérisé en ce que** la plateforme uniforme d'interface vers les services comprend en outre :
un adaptateur EMS pour module NBI (module d'interface vers les services) (206), connecté respectivement au module CORBA EMS et au module SNMP EMS, configuré pour accéder à un système EMS externe et introduire l'accès du module CORBA EMS et du module SNMP EMS ;
un module de processus de garde uniforme (210), configuré pour démarrer, garder et fermer l'adaptateur EMS pour module NBI, le module SNMP EMS, le module CORBA EMS ou le module CORBA NMS.

2. Méthode de démarrage d'une plateforme uniforme d'interface vers les services, **caractérisé en ce qu'**elle comprend les étapes suivantes :
A : sélection et installation (301) d'au moins un parmi des modules prédéfinis d'une plateforme uniforme d'interface vers les services (205) selon des informations de licence obtenues par un utilisateur, modification du fichier de configuration uniforme d'interface vers les services après que l'installation a réussi de sorte à permettre à la plateforme uniforme d'interface vers les services de démarrer normalement ; dans lequel le module prédéfini comprend : un module CORBA NMS (209), un module CORBA EMS (208) et un module SNMP EMS (207) ;
B : démarrage de la plateforme uniforme d'interface vers les services ; lecture (302) du fichier de configuration uniforme d'interface vers les services modifié, et notification d'un module de processus de garde uniforme au sujet du fichier de configuration uniforme d'interface vers les services ; le module de processus de garde uniforme jugeant s'il faut démarrer (307) le module CORBA EMS ou le module SNMP EMS (306) selon le fichier de configuration ; s'il est jugé de ne pas démarrer, le module de processus de garde uniforme démarrant le module CORBA NMS (304) et le processus de démarrage étant terminé ; sinon, continuation à l'étape C ;
C : le module de processus de garde uniforme jugeant s'il faut démarrer le module CORBA NMS (304) ou le module CORBA EMS (306) selon le fichier de configuration uniforme d'interface vers les services modifié ; si le résultat du jugement est de ne pas démarrer, le module de processus de garde uniforme démarrant le module SNMP EMS (306) et continuation à l'étape D ; sinon, le module de processus de garde uniforme démarrant le module CORBA EMS et ensuite continuation à l'étape D ;
D : démarrage d'un adaptateur EMS pour module NBI (308).

3. Méthode de démarrage d'une plateforme uniforme d'interface vers les services selon la revendication 2, **caractérisé en ce que** les informations de licence comprennent : des informations sur un type de module démarré, un IP et un port du module démarré.

4. Support lisible par ordinateur, qui contient une ou plusieurs instructions, dans lequel un processeur exécute des étapes comprises dans la méthode selon la revendication 2 lorsque l'une ou les plusieurs instructions sont exécutées par le processeur.
